# EUROPÄISCHE PATENTSCHRIFT

(11) **EP 3 165 079 B1**
(45) Veröffentlichungstag und Bekanntmachung des Hinweises auf die Patenterteilung: **04.07.2018**
(21) Anmeldenummer: 16191142.5
(22) Anmeldetag: 28.09.2016
(51) Int. Cl.: A01F 15/08

(54) **RUNDBALLENPRESSE**
ROUND BALER
PRESSE À BALLES RONDES

(30) Priorität: 06.11.2015 AT 509492015
(43) Veröffentlichungstag der Anmeldung: 10.05.2017
(73) Patentinhaber: Göweil Maschinenbau GmbH, 4202 Kirchschlag (AT)
(72) Erfinder: Göweil, Herbert, 4202 Kirchschlag (AT)
(74) Vertreter: Patentanwaltskanzlei Hübscher

(56) Entgegenhaltungen:
- WO-A1-2014/129890
- DE-A1- 10 338 349
- DE-C1- 4 315 374

## Beschreibung

Die Erfindung bezieht sich auf eine Rundballenpresse für Halmgut mit einem auf einem Fahrgestell angeordneten Pressgehäuse, das einen fahrgestellfesten Gehäuseteil und eine an diesem Gehäuseteil um eine obere Anlenkachse aufschwenkbar gelagerte Auswurfklappe umfasst, die in einer Offenstellung eine Auswurföffnung für den aus dem Pressgehäuse rollenden Halmgutballen begrenzt.

Zum Herstellen von Rundballen aus landwirtschaftlichem Halmgut werden Rundballenpressen eingesetzt, die ein auf einem Fahrgestell angeordnetes Pressgehäuse mit einer Presskammer aufweisen, deren Mantel aus antreibbaren, im Pressgehäuse gelagerten Presswalzen gebildet wird (EP 1 602 270 A1). Das mittels eines Aufnahmeförderers beim Überfahren vom Boden aufgenommene Halmgut wird gegebenenfalls nach einer Zerkleinerung zwischen zwei Presswalzen in die Presskammer gefördert und durch die angetriebenen Presswalzen umgewälzt und zu einem Ballen gewickelt, der durch die laufende Zufuhr des sich in Windungsform außen an den bereits gebildeten Wickel anlegenden Halmguts zunehmend verdichtet wird. Der auf diese Weise gebildete Halmgutballen wird dann innerhalb der Presskammer mit einer Folie oder einem Netz ummantelt, bevor er ausgeworfen wird. Zu diesem Zweck ist das Pressgehäuse in einen fahrgestellfesten Gehäuseteil und eine um eine obere Anlenkachse an diesem aufschwenkbar gelagerte Auswurfklappe unterteilt. Beim Öffnen der Auswurfklappe rollt somit der ummantelte Halmgutballen unterstützt durch die angetriebenen Presswalzen im Bodenbereich des fahrgestellfesten Gehäuseteils durch die von der Auswurfklappe freigegebene Auswurföffnung aus dem Pressgehäuse auf den Boden. Da dieser Ausstoß aus dem Pressgehäuse ungebremst erfolgt, besteht insbesondere bei abschüssigen Böden die Gefahr, dass der ausgeworfene Halmgutballen unkontrolliert von der Rundballenpresse wegrollt.

Der Erfindung liegt somit die Aufgabe zugrunde, eine Rundballenpresse für Halmgut so auszugestalten, dass die aus dem Pressgehäuse ausgeworfenen Halmgutballen unter Einsatz einfacher Konstruktionsmaßnahmen kontrolliert auf den Boden abgelegt werden können.

Ausgehend von einer Rundballenpresse der eingangs geschilderten Art löst die Erfindung die gestellte Aufgabe dadurch, dass die Auswurfklappe an ihrem der Anlenkachse gegenüberliegenden Ende einen in einer Fangstellung in die Rollbahn des aus dem Pressgehäuse rollenden Halmgutballens ragenden Fanganschlag für den Halmgutballen aufweist.

Durch den beim Aufschwenken der Auswurfklappe in eine Fangstellung in die Rollbahn des aus dem Pressgehäuse auf den Boden rollenden Halmgutballens ragenden Fanganschlag wird der Halmgutballen abgebremst und kommt daher gebremst auf dem Boden zu liegen, sodass auch bei einem abschüssigen Boden die Gefahr eines Weiterrollens des Halmgutballens gebannt werden kann. Zur Freigabe des Halmgutballens ist der Fanganschlag von Halmgutballen abzuheben, was in einfacher Weise durch ein Aufschwenken der Auswurfklappe aus der Fangstellung in die Offenstellung erreicht werden kann. Es wäre aber auch möglich, hierfür den Fanganschlag gegenüber der Auswurfklappe zu verlagern.

Da die Masse der Halmgutballen vergleichsweise groß ist, empfiehlt sich ein gedämpftes Abbremsen der aus dem Pressgehäuse ausgestoßenen Halmgutballen. Zu diesem Zweck kann der Fanganschlag über eine Dämpfungsfeder gegenüber der Auswurfklappe abgestützt werden.

Um eine Beschädigungsgefahr für die Hülle des ummantelten Halmgutballens durch Reibkräfte zwischen der Hülle und dem Fanganschlag weitgehend ausschließen zu können, kann der Fanganschlag als frei drehbar gelagerte Fangwalze ausgebildet werden, sodass die Fangwalze auf der Hülle des Halmgutballens abrollen kann, ohne die Bremswirkung nachteilig zu beeinflussen. Besonders einfache Konstruktionsverhältnisse ergeben sich in diesem Zusammenhang, wenn der Fanganschlag in durch die Dämpfungsfeder beaufschlagten, seitlichen Schwenkhebeln gehalten wird, weil in diesem Fall nicht nur einfache Konstruktionsbedingungen eingehalten werden können, sondern auch eine besonders schonende Abbremsung der Halmgutballen erreicht wird.

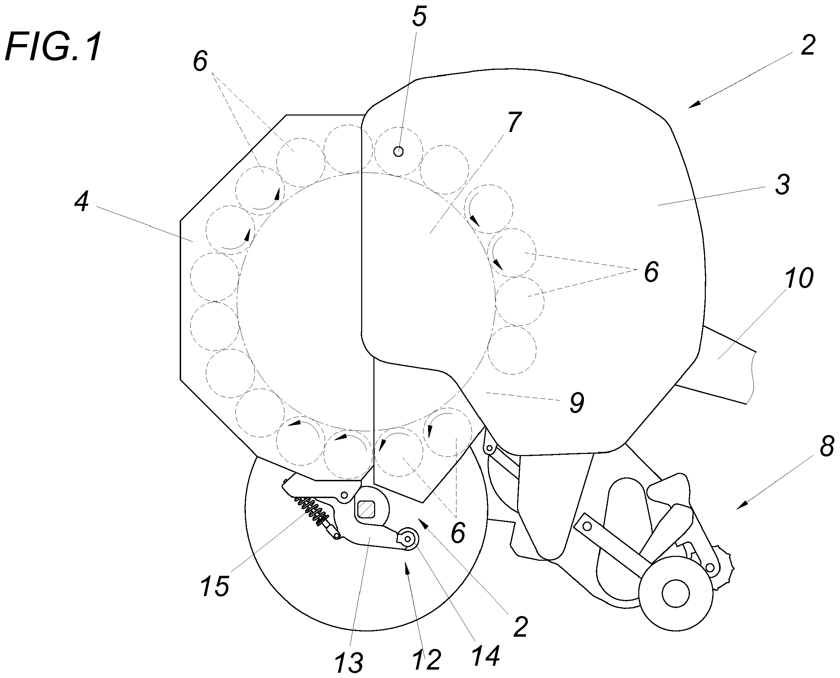

In der Zeichnung ist der Erfindungsgegenstand beispielsweise dargestellt. Es zeigen
- Fig. 1: eine erfindungsgemäße Rundballenpresse in einer zum Teil aufgerissenen schematischen Seitenansicht mit geschlossener Auswurfklappe und
- Fig. 2: diese Rundballenpresse in einer der Fig. 1 entsprechenden Darstellung, jedoch mit der in die Fangstellung ausgeschwenkten Auswurfklappe.

Die Rundballenpresse gemäß dem dargestellten Ausführungsbeispiel weist ein auf einem Fahrgestell 1 angeordnetes Pressgehäuse 2 auf, das in einen fahrgestellfesten Gehäuseteil 3 und eine Auswurfklappe 4 unterteilt ist, die um eine obere Anlenkachse 5 am fahrgestellfesten Gehäuseteil 3 aufschwenkbar gelagert ist. Das Pressgehäuse 2 umfasst eine Presskammer, die umfangsseitig durch angetriebene Presswalzen 6 begrenzt wird. Das zu einem Halmgutballen 7 aufzuwickelnde und zu verdichtende Halmgut wird durch einen Aufnahmeförderer 8 vom Boden aufgenommen und gegebenenfalls nach einer Zerkleinerung zwischen zwei einen Einlass 9 bildenden Presswalzen 6 in die Presskammer gefördert, wenn die mittels einer Deichsel 10 beispielsweise an einen Ackerschlepper angehängte Rundballenpresse über das auf einem Feld liegende Halmgut gezogen wird.

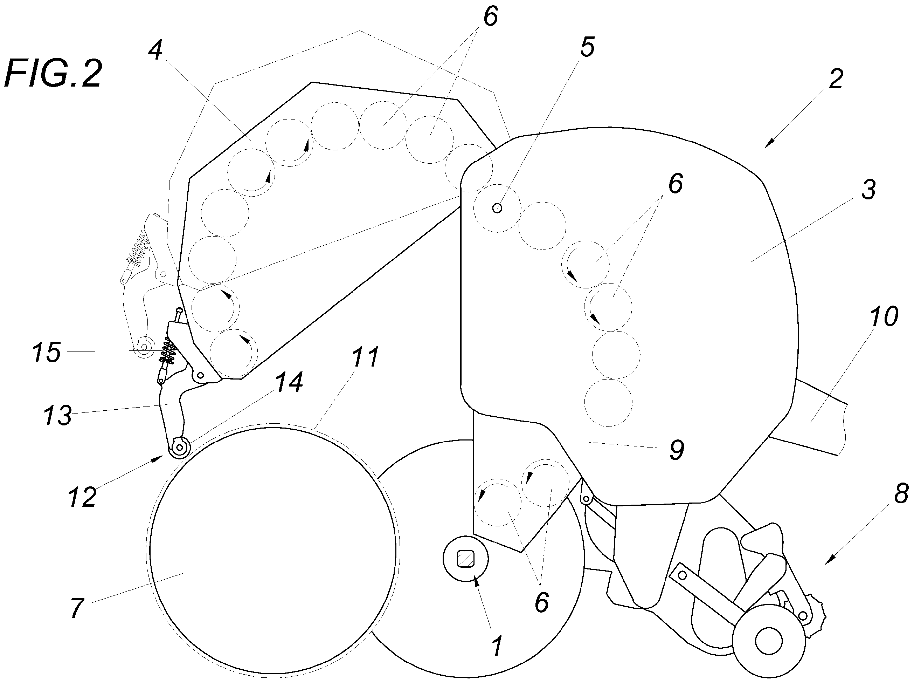

Der Antrieb der Presswalzen 6 erfolgt in herkömmlicher Weise über eine aus Übersichtlichkeitsgründen nicht dargestellte Zapfwelle, wobei die einzelnen Presswalzen 6 beispielsweise mit außerhalb der Presskammer vorgesehenen, durch eine Kette antreibbaren Kettenrädern versehen sein können. Aufgrund dieses Presswalzenantriebs wird das über den Aufnahmeförderer 8 in die Presskammer eingebrachte Halmgut zunächst von den an den Presskammereinlass 9 anschließenden unteren Presswalzen 6 des fahrgestellfesten Gehäuseteils 3 den Presswalzen 6 der Auswurfklappe 4 zugefördert und durch diese Presswalzen 6 entlang der Auswurfklappe 4 in einer Umlaufbewegung hochgefördert, um durch die Presswalzen 6 des Gehäuseteils 3 wieder abwärts geführt zu werden. Das über den Aufnahmeförderer 8 zugeführte Halmgut wird somit Windung für Windung zu einem Halmgutwickel aufgewickelt und mit zunehmendem Wickeldurchmesser zunehmend verdichtet, bis der fertige Halmgutballen 7 durch eine Folie oder ein Netz ummantelt wird, um das Halmgut in Form eines verdichteten Halmgutballens 7 festzuhalten. Die zur Ummantelung vorgesehene Hülle 11 wird in herkömmlicher Weise in die Presskammer eingeführt und um den Halmgutwickel gewunden, bevor die Auswurfklappe 4 zum Austragen des ummantelten Halmgutballens 7 aufgeschwenkt wird, wie dies der Fig. 2 entnommen werden kann.

Der mit einer Hülle 11 ummantelte Halmgutballen 7 rollt bei geöffneter Auswurfklappe 4 unterstützt durch die angetriebenen, bodenseitigen Presswalzen 6 des fahrgestellfesten Gehäuseteils 3 durch die sich ergebende Auswurföffnung aus dem Pressgehäuse 2 auf den Boden und würde auf dem Boden weiterrollen, wenn nicht für eine Abbremsung des Halmgutballens 7 gesorgt wird. Zu diesem Zweck ist an der Auswurfklappe ein Fanganschlag 12 vorgesehen, der im Bereich des der Anlenkachse 5 gegenüberliegenden Endes der Auswurfklappe 4 angeordnet ist und in die Rollbahn der aus dem Pressgehäuse 2 ausgestoßenen Halmgutballen 7 ragt, wenn die Auswurfklappe in eine vorgegebene Fangstellung aufgeschwenkt wird. Die Halmgutballen 7 werden daher in der Gangstellung der Auswurfklappe 4 durch den Fanganschlag 12 an einem Weiterrollen entlang des Bodens gehindert.

Gemäß dem dargestellten Ausführungsbeispiel wird der Fanganschlag 12 durch eine frei drehbar in seitlichen Schwenkhebeln 13 gelagerte Fangwalze 14 gebildet, die unter Schonung der Hülle 11 auf dem Halmgutballen 7 abrollen kann. Zur Dämpfung des Fanganschlags 12 werden die Schwenkhebel 13 durch eine Dämpfungsfeder 15 beaufschlagt, gegen deren Kraft die Schwenkhebel 13 verschwenkt werden, wenn die aus dem Pressgehäuse 2 rollenden Halmgutballen 7 an den Fanganschlag 12 auftreffen.

Um die durch den Fanganschlag 12 an einem Weiterrollen entlang des Bodens gehinderten Halmgutballen 7 freizugeben, muss der Fanganschlag 12 vom Halmgutballen 7 abgehoben werden. Zu diesem Zweck wird die Auswurfklappe 4 aus der vorgegebenen Fangstellung weiter in die Offenstellung aufgeschwenkt, wie dies strichpunktiert in der Fig. 2 angedeutet ist. Die Rundballenpresse kann dann vom abgelegten Halmgutballen 7 weggezogen werden, um nach einem Schließen der Auswurfklappe 4 für die Herstellung eines neuen Halmgutballens bereit zu sein.

## Patentansprüche

1. Rundballenpresse für Halmgut mit einem auf einem Fahrgestell (1) angeordneten Pressgehäuse (2), das einen fahrgestellfesten Gehäuseteil (3) und eine an diesem Gehäuseteil (3) um eine obere Anlenkachse (5) aufschwenkbar gelagerte Auswurfklappe (4) umfasst, die in einer Offenstellung eine Auswurföffnung für den aus dem Pressgehäuse (2) rollenden Halmgutballen (7) begrenzt, **dadurch gekennzeichnet, dass** die Auswurfklappe (4) an ihrem der Anlenkachse (5) gegenüberliegenden Ende einen in einer vorgegebenen Fangstellung in die Rollbahn des aus dem Pressgehäuse (2) rollenden Halmgutballens (7) ragenden Fanganschlag (12) für den Halmgutballen (7) aufweist.

2. Rundballenpresse nach Anspruch 1, **dadurch gekennzeichnet, dass** der Fanganschlag (12) über eine Dämpfungsfeder (15) gegenüber der Auswurfklappe (4) abgestützt ist.

3. Rundballenpresse nach Anspruch 1 oder 2, **dadurch gekennzeichnet, dass** der Fanganschlag (12) als frei drehbar gelagerte Fangwalze (14) ausgebildet ist.

4. Rundballenpresse nach Anspruch 2 oder 3, **dadurch gekennzeichnet, dass** der Fanganschlag (12) in durch die Dämpfungsfeder (15) beaufschlagten, seitlichen Schwenkhebeln (13) gehalten ist.

## Claims

1. Round baler for stalk stock, having a baler housing (2) arranged on a travelling mechanism (1) and comprising a housing part (3) fixed to the travelling mechanism and an ejection flap (4) mounted on this housing part (3) so as to be pivotable about an upper articulation spindle (5), said flap delimiting in an open position an ejection opening for the bales of stalk stock (7) rolling out of the baler housing (2),
**characterised in that** the ejection flap (4) comprises, at its end opposite the articulation spindle (5), a capture stop (12) for the bales of stalk stock (7), said stop protruding in a predetermined capture position into the roller track of the bale of stalk stock (7) rolling out of the baler housing (2).

2. Round baler as claimed in claim 1, **characterised in that** the capture stop (12) is supported against the ejection flap (4) via a damping spring (15).

3. Round baler as claimed in claim 1 or 2, **characterised in that** the capture stop (12) is formed as a freely rotatably mounted capture roller (14).

4. Round baler as claimed in claim 2 or 3, **characterised in that** the capture stop (12) is held in lateral pivot levers (13) acted upon by the damping spring (15).

## Revendications

1. Presse à balles rondes pour de la paille avec un boîtier de presse (2) disposé sur un châssis roulant (1) qui comprend une partie de boîtier (3) solidaire du châssis roulant et une trappe d'éjection (4) montée sur ladite partie de boîtier (3) pivotante autour d'un axe d'articulation (5) supérieur qui délimite, dans une position ouverte, une ouverture d'éjection pour les balles de paille (7) roulant hors du boîtier de presse (2), **caractérisée en ce que** la trappe d'éjection (4) présente, à son extrémité faisant face à l'axe d'articulation (5), une butée d'interception (12) faisant saillie, dans une position d'interception prédéfinie, dans la voie de roulement de la balle de paille (7) roulant hors du boîtier de presse (2), pour les balles de paille (7).

2. Presse à balles rondes selon la revendication 1, **caractérisée en ce que** la butée d'interception (12) est appuyée contre la trappe d'éjection (4) par le biais d'un ressort amortisseur (15).

3. Presse à balles rondes selon la revendication 2 ou 3, **caractérisée en ce que** la butée d'interception (12) est réalisée en tant que cylindre d'interception (14) placé pouvant tourner librement.

4. Presse à balles rondes selon la revendication 2 ou 3, **caractérisée en ce que** la butée d'interception (12) est maintenue dans des leviers pivotants (13) latéraux, sollicités par le ressort amortisseur (15).
